# EUROPÄISCHE PATENTANMELDUNG

(11) **EP 4 159 464 A1**
(43) Veröffentlichungstag der Anmeldung: **05.04.2023**
(21) Anmeldenummer: 22196537.9
(22) Anmeldetag: 20.09.2022
(51) Int. Cl.: B42D 25/387, B42D 25/391, C09C 1/00, C09K 11/00

(54) **WINKELABHÄNGIGES GEDRUCKTES VERBORGENES SICHERHEITSELEMENT**

(30) Priorität: 20.09.2021 DE 102021210432
(71) Anmelder: Bundesdruckerei GmbH, 10969 Berlin (DE)
(72) Erfinder: Jungk, Phillip, 12105 Berlin (DE); Link, Agnes, 14055 Berlin (DE); Faulkner, Duncan, 10623 Berlin (DE)
(74) Vertreter: Obst, Bernhard

(57) **Zusammenfassung**

Die Erfindung betrifft ein Sicherheitselement (30) mit richtungsabhängigem verborgenen Sicherheitsmerkmal umfassend mindestens ein Substrat (22) und einen Druck (35), der Funktionspigmente (3000) umfasst, wobei die Funktionspigmente (3000) Lumineszenzstoffe (3100, 3200, 3300, Schraffuren) umfassen, die mit einer Anregungsstrahlung (110) zur Emission von Lumineszenzstrahlung (150) in einem ersten Wellenlängenbereich (1200) und in einem zweiten Wellenlängenbereich anregbar sind, wobei die Funktionspigmente (3000) eine erste Interferenzstruktur (3400) und eine zweite Interferenzstruktur umfassen, und die Interferenzstrukturen (3400, 3500) so ausgebildet sind, dass die erfassbare Lumineszenzstrahlung (150) in dem ersten Wellenlängenbereich (1200) eine Abhängigkeit von einer Anregungsrichtung (120) der einen Anregungsstrahlung (110) und die erfassbare Lumineszenzstrahlung (150) im zweiten Wellenlängenbereich (1300) eine Abhängigkeit von der Anregungsrichtung (120) zeigen, wobei die Anregungsrichtungsabhängigkeit für die beiden Wellenlängenbereiche (1200, 1300) verschieden sind. Anstelle von oder zusätzlich zur Anregungsrichtung ist eine Erfassungsrichtung, mit den gleichen unterschiedlichen Abhängigkeiten.

## Beschreibung

Die Erfindung betrifft ein Sicherheitselement, welches zur Absicherung gegenüber Fälschungen, Verfälschungen und Nachahmungen eingesetzt wird und nicht unmittelbar erkennbar ist. Insbesondere wird ein Bestandteil des Sicherheitselementes mittels eines Druckverfahrens als ein Druck ausgebildet.

Aus dem Stand der Technik ist es bekannt, Gegenstände mit bestimmten Merkmalen auszubilden, welche durch einen Fälscher schwer nachzuahmen, zu manipulieren und/oder zu verfälschen sind, ohne dass eine solche Manipulation bei einer Überprüfung auf einfache Weise festgestellt werden kann. Solche Merkmale werden als Sicherheitsmerkmale bezeichnet.

Körperliche Gegenstände oder körperliche Bestandteile, die ein Sicherheitsmerkmal ausbilden oder beinhalten, werden als Sicherheitselemente bezeichnet.

Sicherheitsmerkmale sind beispielsweise in Ausweisen, Reisepässen, Personalausweisen, Identitätskarten, Bankkarten, Banknoten, Führerscheinen, Visa, Eintrittskarten und/oder Luxusartikeln enthalten, um diese als authentisch und unverfälscht zu kennzeichnen. Im Sinne der obigen Definition stellen diese auch jeweils Sicherheitselemente dar.

Die Prüfung, ob ein Sicherheitsmerkmal oder ein Sicherheitselement vorhanden und/oder unverfälscht ist, wird auch als Verifikation bezeichnet.

Ein Großteil der Sicherheitselemente und Sicherheitsmerkmale kann mittels optischer Verfahren verifiziert werden. Optische Verfahren sind hierbei solche Verfahren, die eine Wechselwirkung von elektromagnetischer Strahlung im sichtbaren Wellenlängenbereich, im ultravioletten (UV-)Wellenlängenbereich und/oder im infraroten (IR-)Wellenlängenbereich mit dem Sicherheitselement und/oder Sicherheitsmerkmal nutzen, um die Echtheit und Unversehrtheit des Sicherheitsmerkmals und/oder Sicherheitselements zu prüfen.

Ein einfaches optisches Verifikationsverfahren nutzt die bildliche Erfassung des Sicherheitselements, beispielsweise um einen Guillochendruck o. Ä. zu erfassen und auf dessen Vorhandensein und Ausführung zu prüfen. Ein anderes optisches Verifikationsverfahren prüft beispielsweise sogenannte optische variable Farben, OVI-Farben, die unter unterschiedlichen Belichtungs- und/oder Betrachtungsrichtungen/Erfassungsrichtungen einen unterschiedlichen Farbeindruck vermitteln bzw. Licht unterschiedlicher Wellenlängen remittieren/absorbieren.

Andere Sicherheitselemente und Sicherheitsmerkmale nutzen physikalische Effekte von bestimmten Stoffen aus, beispielsweise einen Lumineszenzeffekt. Als Lumineszenzeffekt oder Lumineszenz wird die Emission von elektromagnetischer Strahlung eines Stoffes als Folge einer Anregung bezeichnet. Ein solcher Stoff, der einen Lumineszenzeffekt zeigt, wird als Lumineszenzstoff bezeichnet. Die Anregung kann hierbei auf unterschiedliche Art und Weise erfolgen. Eine wichtige Gruppe der Lumineszenzstoffe sind die sogenannten Fotolumineszenzstoffe, bei denen die Anregung mit elektromagnetischer Strahlung erfolgt.

Um Fälschungen zu erschweren oder unmöglich zu machen, ist es Ziel, die Sicherheitselemente so auszugestalten, dass sie für Fälscher nur schwer oder gar nicht herstellbar sind. Daher besteht ein Interesse daran, immer neue und andersartige Sicherheitselemente zu entwickeln.

Der Erfindung liegt somit die Aufgabe zugrunde, ein Sicherheitselement zu schaffen, welches möglichst mit einfachen Hilfsmitteln zu verifizieren und vorzugsweise für einen Fälscher nicht offensichtlich als vorhanden zu erkennen ist.

Die Erfindung wird durch ein Sicherheitselement mit den Merkmalen des Patentanspruchs 1 gelöst. Vorteilhafte Weiterbildung der Erfindung ergeben sich aus den Unteransprüchen.

Die Grundidee der Erfindung besteht darin, ein Sicherheitsmerkmal zu schaffen, welches Funktionspigmente verwendet, die auf ein Substrat gedruckt werden. Die Funktionspigmente umfassen Lumineszenzstoffe, die mit einer Anregungsstrahlung zur Emission von Lumineszenzstrahlung in einem ersten Wellenlängenbereich und einem zweiten Wellenlängenbereich anregbar sind. Die Funktionspigmente umfassen darüber hinaus eine erste Interferenzstruktur und eine zweite Interferenzstruktur, wobei die erste Interferenzstruktur dem ersten Wellenlängenbereich und die zweite Interferenzstruktur dem zweiten Wellenlängenbereich zugeordnet ist. Die Interferenzstrukturen sind nun so ausgebildet, dass die erfassbare Lumineszenzstrahlung in dem ersten Wellenlängenbereich eine Abhängigkeit von der Anregungsrichtung der einen Anregungsstrahlung und/oder eine Abhängigkeit von der Erfassungseinrichtung zeigt und die erfassbare Lumineszenzstrahlung in dem zweiten Wellenlängenbereich eine Abhängigkeit von der Anregungsrichtung der einen Anregungsstrahlung und/oder eine Abhängigkeit von der Erfassungseinrichtung zeigt, wobei die Anregungsrichtungsabhängigkeit und/oder die Erfassungseinrichtungsabhängigkeit für die beiden Wellenlängenbereiche verschieden sind.

Beispielsweise kann die Lumineszenzstrahlung, die in dem ersten Wellenlängenbereich emittiert wird, eine Abhängigkeit von der Erfassungsrichtung zeigen, d. h. eine Winkelabhängigkeit bezüglich der Orientierung einer Erfassungsvorrichtung zu einer Oberfläche des Sicherheitselements oder einer Oberflächennormale der Oberfläche des Sicherheitselements. Die Winkelabhängigkeit der Lumineszenzstrahlung im ersten Wellenlängenbereich resultiert beispielsweise von Interferenzen der Lumineszenzstrahlung mit der ersten Interferenzstruktur. Die Lumineszenzstrahlung in dem zweiten Wellenlängenbereich zeigt hingegen beispielsweise eine Abhängigkeit von der Anregungsrichtung der einen Anregungsstrahlung, die durch Interferenzeffekte der Anregungsstrahlung mit der zweiten Interferenzstruktur verursacht ist. Andere Ausführungsformen können vorsehen, dass das Sicherheitselement auch in dem zweiten Wellenlängenbereich eine Erfassungsrichtungsabhängigkeit zeigt, die von einem Interferenzeffekt mit der zweiten Interferenzstruktur verursacht ist. Es sind auch Ausführungsformen möglich, bei denen die Lumineszenzstrahlung in einem ersten Wellenlängenbereich eine Erfassungsrichtungsabhängigkeit aufgrund einer Wechselwirkung mit der ersten Interferenzstruktur aufweist und die Lumineszenzstrahlung in dem ersten und dem zweiten Wellenlängenbereich beide zusätzlich jeweils eine Abhängigkeit von der Einstrahlrichtung zeigen, diese kann für beide Wellenlängenbereiche identisch sein. Die Lumineszenzstrahlung kann in dem zweiten Wellenlängenbereich auch zusätzlich eine Erfassungsrichtungsabhängigkeit zeigen, muss dieses jedoch nicht. Wesentlich ist, dass zumindest bei der Abhängigkeit von der Anregungsrichtung oder bei der Abhängigkeit von der Erfassungsrichtung für beide Wellenlängenbereiche ein Unterschied existiert. Liegen der erste und der zweite Wellenlängenbereich im sichtbaren Wellenlängenbereich, so ist eine solche Unterschiedlichkeit mit einem Wechsel eines Farbeindrucks aufgrund der Farbaddition verknüpft, wenn die Lumineszenzstrahlung von einem menschlichen Betrachter erfasst wird.

Bei anderen Ausführungsformen kann die Lumineszenzstrahlung im ersten Wellenlängenbereich und in dem zweiten Wellenlängenbereich jeweils eine Abhängigkeit von der Einstrahlrichtung der Anregungsstrahlung, d. h. eine Abhängigkeit von der Anregungsrichtung zeigen, wobei sich die Veränderungen der emittierten Lumineszenzstrahlung im ersten Wellenlängenbereich und in den zweiten Wellenlängenbereich bei unterschiedlichen Anregungsrichtungen zeigen.

Bei wieder anderen Ausführungsformen zeigt die emittierte Lumineszenzstrahlung in dem ersten Wellenlängenbereich eine Erfassungsrichtungsabhängigkeit und in dem zweiten Wellenlängenbereich ebenfalls einer Erfassungseinrichtungsabhängigkeit, jedoch treten Änderungen der erfassten Lumineszenz in den beiden Wellenlängenbereichen, dem ersten Wellenlängenbereich und dem zweiten Wellenlängenbereich bei unterschiedlichen Erfassungsrichtungen auf.

Die Winkelabhängigkeit zeigt sich jeweils in einer Änderung der erfassten bzw. erfassbaren Lumineszenz abhängig von der Änderung der Anregungsrichtung der Anregungsstrahlung und/oder der Erfassungseinrichtung der Lumineszenzstrahlung.

Ein Sicherheitsmerkmal, welches einen Effekt nur abhängig von bestimmten Einstrahlrichtungen der Anregungsstrahlung und/oder unter bestimmten Erfassungsrichtungen zeigt, ist für einen Fälscher nicht ohne Weiteres als vorhanden erkennbar. Daher liegt ein verborgenes Sicherheitsmerkmal bzw. verborgenes Sicherheitselement vor. Dieses kann dennoch auf einfache Weise unter Zuhilfenahme einer geeigneten Anregungsquelle, welche Anregungsstrahlung emittiert, verifiziert werden.

Dadurch dass die Effekte in einem Funktionspigment umgesetzt sind, treten die erwähnten Effekte präzise lokalisiert auf. Bei einer ortsabhängigen Untersuchung kann dieses geprüft werden, um Nachahmungen, die mit unterschiedlichen Pigmenten nachgebildet sind, auffinden zu können. Auch nicht zerstörungsfreie Methoden, bei denen versucht wird die Funktionspigmente des Drucks zu trennen, können für den Nachweis von solchen Fälschungen eingesetzt werden. Lassen sich unterschiedlich wirkende Funktionspigmente separieren, handelt es sich um eine Fälschung.

### Definitionen

Als Anregungsrichtung wird die Richtung bezeichnet, unter der Anregungsstrahlung auf einen Gegenstand eingestrahlt wird. Diese Anregungsrichtung kann in einem Koordinatensystem, welches fest mit dem Gegenstand gekoppelt ist, der angeregt werden soll, angeben werden. Die Anregungsrichtung ist somit relativ zu einem Sicherheitselement in einem mit dem Sicherheitselement verknüpften Koordinatensystem angebbar.

Als Erfassungsrichtung wird die Richtung bezeichnet, unter der Lumineszenzlicht aus einem Sicherheitselement oder einem Sicherheitsdokument, in dem das Sicherheitselement integriert ist, austritt, welches von einer Erfassungsvorrichtung erfasst wird. Die Erfassungsrichtung fällt in der Regel mit einer geraden Verbindungslinie zusammen, die sich von einem Zentrum des Sicherheitselements zu einem Zentrum einer Optik der Erfassungsvorrichtung erstreckt. Die Richtung kann ebenso wie die Anregungsrichtung in einem mit dem Sicherheitselement verknüpften Koordinatensystem angegeben werden.

Da die Anregungsrichtung als auch die Erfassungsrichtung in einem Koordinatensystem über einen oder mehrere Winkel angebbar sind, deren Werte sich mit der Richtungsänderung verändern, wird als Synonym für eine Richtungsabhängigkeit auch von einer Winkelabhängigkeit gesprochen.

Wenn von einer Winkelabhängigkeit gesprochen wird, ist hierbei im Zweifel eine Abhängigkeit sowohl von einem Elevationswinkel und einem Azimutalwinkel gemeint, auch wenn in der Beschreibung verkürzend nur von einem Winkel gesprochen wird. Häufig wird bei geeigneter Wahl des Koordinatensystems nur eine Abhängigkeit von einem Winkel bestehen. Dennoch soll auch an jenen Stellen, an denen nur von einem Winkel gesprochen wird, diese Abhängigkeit von nur einem Winkel nicht impliziert werden. Die Reduktion auf einen Winkel in der Beschreibung dient lediglich der Vereinfachung der Darstellung, es sei denn, die Symmetrie bezüglich eines Winkels (und somit eine Unabhängigkeit von diesem) ist ausdrücklich erwähnt.

Als Anregungsstrahlung wird die elektromagnetische Strahlung bezeichnet, die zum Anregen der Lumineszenz verwendet wird. Diese ist vorzugsweise schmalbandige Strahlung, besonders bevorzugt im UV-Wellenlängenbereich.

Ein Lumineszenzstoff ist ein Stoff, der durch äußere Anregung zum Emittieren von elektromagnetischer Strahlung, welche auch als Lumineszenzstrahlung oder verkürzt als Lumineszenz bezeichnet wird, angeregt werden kann. Im Zusammenhang mit der hier beschriebenen Erfindung ist der Lumineszenzstoff jeweils ein Fotolumineszenzstoff, welcher durch elektromagnetische Strahlung zur Lumineszenz anregbar ist. Ein Lumineszenzstoff kann ein Reinstoff oder ein Stoffgemisch sein. Auch der Effekt der Lumineszenz wird häufig als Lumineszenz bezeichnet. Der Begriff Lumineszenz kann somit den Effekt der Emission von Strahlung als Folge einer Anregung als auch die Lumineszenzstrahlung bezeichnen. Für den Fachmann ist es kein Problem, die korrekte Zuordnung zu treffen.

Ein Luminophor ist ein Stoff, der eine Lumineszenz aufweist. Ein Lumineszenzstoff kann aus einem oder mehreren Luminophoren bestehen.

Als sichtbares Licht wird elektromagnetische Dipolstrahlung bezeichnet, die durch einen menschlichen Betrachter wahrnehmbar ist. Unabhängig von verschiedenen physiologischen Gegebenheiten und Variationen, wird hier der Wellenlängenbereich zwischen 380 Nanometer und 780 Nanometer als sichtbarer Wellenlängenbereich aufgefasst.

Als infrarotes (IR-)Licht oder IR-Strahlung wird elektromagnetische Strahlung aufgefasst, deren Wellenlänge größer als 780 Nanometer ist und kleiner gleich 1 Millimeter.

Als UV-Licht wird elektromagnetische Strahlung betrachtet, deren Wellenlänge im Bereich zwischen 380 Nanometer und 100 Nanometer liegt. Dieser Bereich unterteilt sich in drei Unterbereiche: den UV-A-Bereich, dessen Wellenlängenbereich von 380 Nanometer bis 315 Nanometer reicht, den UV-B-Bereich, der von 315 Nanometer bis 280 Nanometer reicht, und den UV-C-Bereich, der von 280 Nanometer bis 100 Nanometer reicht.

Auch elektromagnetische Strahlung im IR- und UV-Wellenlängenbereich wird als Licht bezeichnet.

Bei der Fotolumineszenz ist die Wellenlänge des Lumineszenzlichts oder der Lumineszenzstrahlung in der Regel größer als die des Anregungslichts bzw. der Anregungsstrahlung. Bei einem sogenannten Anti-Stokes-Effekt sind die Wellenlängenbeziehungen jedoch genau umgekehrt.

Das optische Detektieren von elektromagnetischer Strahlung wird hier unter dem Begriff "Erfassen" zusammengefasst. Auch das Betrachten oder Beobachten von Strahlung wird als Erfassen der Strahlung angesehen. Die Begriffe "beobachten" und "betrachten" sowie die hieraus abgeleiteten Formen und Begriffe können somit immer durch die entsprechenden Formen des Begriffs "erfassen" ersetzt werden. Die Aussage, dass ein Farbwechsel von einem menschlichen Betrachter beobachtbar ist, ist somit gleichbedeutend damit, dass Veränderung der Intensitäten in einzelnen Wellenlängenbereichen des sichtbaren Lichts, die ursächlich für den Farbwechsel sind, mit einer entsprechenden optischen Erfassungsvorrichtung erfassbar oder messbar sind.

Als transparent für Licht einer bestimmten Wellenlänge oder eines Wellenlängenbereichs wird hier ein Material angesehen, durch das hindurch eine Abbildung gemäß der geometrischen Optik mit Licht dieser Wellenlänge oder dieses Wellenlängenbereichs möglich ist: Eine klare Folie ist somit, unabhängig ob sie farblos oder eingefärbt ist, transparent. Eine diffus streuende, einen milchigen Eindruck erweckende Folie ist hingegen im Sinne dieser Definition nicht transparent, sondern wird als transluzent bezeichnet.

### Bevorzugte Ausführungsformen

Bevorzugte Ausführungsformen sehen vor, dass der erste Wellenlängenbereich und der zweite Wellenlängenbereich im sichtbaren Wellenlängenbereich liegen. Dieses bedeutet, dass sowohl der erste Wellenlängenbereich als auch der zweite Wellenlängenbereich jeweils in dem Wellenlängenbereich zwischen 380 Nanometer und 780 Nanometer liegen. Solche Ausführungsformen bieten den Vorteil, dass die Lumineszenzstrahlung von einem menschlichen Betrachter erfasst werden kann. Eine Verifikation ist somit bei solchen Ausführungsformen sowohl durch eine menschliche Person als auch mithilfe von technischen Erfassungsvorrichtungen möglich, die Licht im sichtbaren Wellenlängenbereich wellenlängen- und intensitätsaufgelöst erfassen können.

Gegebenenfalls ist zusätzlich auch eine ortsaufgelöste Erfassung von Vorteil, um ein Muster, das über die flächige Anordnung des Drucks erzeugt ist, erfassen und auswerten zu können. Wie üblich beim Drucken kann hierüber in dem Druck eine Information gespeichert werden.

Das Sicherheitselement ist vorzugsweise so ausgestaltet, dass die eine Anregungsstrahlung UV-Strahlung ist. Vorzugsweise liegt die Wellenlänge der Anregungsstrahlung im Wellenlängenbereich von 380 Nanometer bis 315 Nanometer (UV-A) oder im Wellenlängenbereich von 315 Nanometer bis 280 Nanometer (UV-B) oder im Wellenlängenbereich von 280 Nanometer bis 100 Nanometer (UV-C). Besonders bevorzugt beträgt die Wellenlänge der Anregungsstrahlung 365 Nanometer oder 312 Nanometer oder 254 Nanometer. Für diese Welllängen sind Anregungsquellen einfach verfügbar.

Besonders bevorzugt sind der erste Welllängenbereich und der zweite Wellenlängenbereich nicht überlappend und somit disjunkt. In jedem Fall sind diese jedoch deutlich verschieden.

Die in den beiden Wellenlängenbereichen auftretenden winkelabhängigen Effekte sind bei einer bevorzugten Ausführungsform nicht von einer breitbandigen Anregungsstrahlung abhängig.

Die Anregungsstrahlung ist vorzugsweise schmalbandige UV-Strahlung aus einem der oben bezeichneten UV-Bereiche, bzw. besonders bevorzugt schmalbandige UV-Strahlung mit einer der oben angegebenen Wellenlängen, für die es gut verfügbare geeignete Anregungsquellen gibt.

Um das in dem Sicherheitselement ausgebildete Sicherheitsmerkmal zu verbergen, sieht eine besonders bevorzugte Ausführungsform vor, dass die Lumineszenzstoffe bei einer Weißlicht-Bestrahlung, die ein wellenlängenkontinuierliches Spektrum im sichtbaren Wellenlängenbereich aufweist, keine Lumineszenzstrahlung im sichtbaren Wellenlängenbereich emittieren. Der zur Verifikation genutzte Effekt tritt somit bei einer normalen Beleuchtung mit Umgebungslicht nicht auf.

Noch besser bleibt das Sicherheitsmerkmal bei Ausführungsformen verborgen, bei denen die Funktionspigmente bei einer Weißlicht-Bestrahlung farblos sind. Dieses bedeutet, dass die Funktionspigmente keine oder nahezu keine Remission oder Absorption von Licht in im sichtbaren Wellenlängenbereich aufweisen.

Um eine einheitliche Ausrichtung der Funktionspigmente in einem Druck zu erreichen, sieht eine bevorzugte Ausführungsform vor, dass die Funktionspigmente eine Vorzugsrichtung für eine Ausrichtung in dem Druck aufweisen.

Besonders bevorzugt weisen die Funktionspigmente eine flache Form auf. Besonders bevorzugt weisen Funktionspigmente einen Kern auf, der eine flache Form aufweist. Der Kern ist beispielsweise als Plättchen ausgebildet. Ein Plättchen weist in einer Ebene eine sehr viel größere Ausdehnung als in einer senkrecht zu der Ebene orientierten Richtung auf. Eine Umrissform des Plättchens in der Ebene hat keine oder nur eine untergeordnete Bedeutung.

Als Vorzugsrichtung eignet sich somit die senkrecht zur Ebene stehende Richtung, welche bei einer bevorzugten Ausrichtung im Druck parallel zu einer Oberflächennormale des Substrats orientiert ist, auf die die Funktionspigmente mittels des Drucks aufgebracht sind.

Bei bevorzugten Ausführungsformen überlagert die erste Interferenzstruktur die zweite Interferenzstruktur oder umgekehrt.

Häufig sind die Interferenzstrukturen bezüglich der Ebene des Kerns, deren Oberflächennormale eine Vorzugsrichtung des Funktionspigments auszeichnet, symmetrisch, d. h. sowohl auf einer Ober- als auch auf einer Unterseite des Kerns einander überlagernd ausgebildet. Hierbei ist vorzugsweise beispielsweise die erste Interferenzstruktur unmittelbar benachbart zu dem Kern und die andere der zwei Interferenzstrukturen, die zweite Interferenzstruktur, beabstandet vom Kern ausgebildet. Interferenzstrukturen werden bei bevorzugten Ausführungsformen aus dünnen Schichten mit unterschiedlichen Brechungsindizes gebildet. Die können mit verschiedenen Verfahren auf oder um den Kern geschichtet werden. Die Schichtdicken und die Brechungsindexauswahl der Interferenzschichten legen die Wellenlänge und den oder die Winkel fest, unter denen Lumineszenz einen Änderungseffekt bezüglich der erfassbaren Intensität erfährt.

Bei flach ausgebildeten Funktionspigmenten, insbesondere solchen, die einen ebenen oder nur leicht gewölbten oblaten Kern aufweisen, zeigen Interferenzstrukturen, die im Wesentlichen aus Schichten parallel zu den Oberflächen des Kerns gebildet sind, hinsichtlich der Wechselwirkung meist eine Zylindersymmetrie mit der Oberflächennormale im Mittelpunkt der flachen Seite des Kerns als Symmetrieachse.

Die Interferenzstrukturen können darüber hinaus auch teilverspiegelte Flächen aus dünnen Metallschichten oder Halbleitern umfassen. Auch diese können genutzt werden, um über einen Fabry-Perot-Effekt einen erfassungsrichtungsabhängigen und/oder anregungsrichtungsabhängigen Effekt zu erzeugen.

Andere Ausführungsformen sehen vor, dass die erste Interferenzstruktur und/oder die zweite Interferenzstruktur eine photonische Kristallstruktur umfassen. Diese weist vorzugsweise eine nicht vollständige Bandlücke für den zugeordneten Wellenlängenbereich oder die Anregungsstrahlung auf. Somit existieren Erfassungsrichtungen, unter denen ein Durchtritt der Lumineszenzstrahlung durch die als photonischer Kristall ausgebildete Interferenzstruktur nicht möglich ist. Unter anderen Durchtrittsrichtungen ist hingegen eine Ausbreitung der Lumineszenzstrahlung des entsprechenden Wellenlängenbereichs in der als photonischer Kristall ausgebildeten Interferenzstruktur möglich, sodass abhängig von der Erfassungseinrichtung, d. h. der Durchtrittsrichtung der Lumineszenzstrahlung durch die als photonischer Kristall ausgebildet Interferenzstruktur, die Intensität der erfassten Lumineszenzstrahlung variiert.

Wieder andere Ausführungsformen können als Interferenzstruktur eine doppelbrechende Substanz und einen Polarisationsfilter aufweisen. Polarisationsfilter lassen sich beispielsweise durch Strecken von Polymerfolien erzeugen. Als doppelbrechende Substanzen kommen beispielsweise Flüssigkristalle infrage, die beispielsweise ebenfalls in Polymerstrukturen eingebettet sein können.

Einige Ausführungsformen weisen Materialien mit Streuzentren auf, die in einer regelmäßigen Struktur angeordnet sind und über einen Lippmann-Bragg-Effekt eine winkelabhängige Variation der erfassbaren Lumineszenz und/oder der Anregungsstrahlung erzeugen.

Eine weitere Möglichkeit besteht darin, in eine oder mehrere Schichten ein Hologramm, insbesondere ein Volumentransmissionshologramm oder ein Volumenreflexionshologramm, einzuschreiben. Ein Volumenreflexionshologramm oder Schichten von Volumenreflexionshologrammen zu verwenden, bietet beispielsweise die Möglichkeit, wenn es mit oder für die Wellenlänge der Anregungsstrahlung erzeugt ist, für mindestens eine ausgewählte Anregungsrichtung eine nahezu vollständige Reflexion der Anregungsstrahlung zu erreichen, sodass diese Anregungsstrahlung unter dem Hologramm befindliche Lumineszenzmittel nicht oder nur sehr schwach anregen kann. Das Hologramm ist in einem solchen Fall vorzugsweise als Hologramm eines Spiegels oder einer Streuscheibe ausgebildet. Der Winkel, unter dem bei der Einstrahlung die nahezu vollständige reflektierende Beugung eintritt, und die Richtung, in die die Anregungsstrahlung gebeugt wird, können bei der Herstellung des Hologramms frei festgelegt werden. Hierbei wird es vorteilhaft sein, beispielsweise eine optimale reflektierende Beugung für eine Einstrahlrichtung der Anregungsstrahlung unter einem Winkel von 45° gegen die Oberflächennormale der Ebene des Kerns des Funktionspigments vorzusehen und die reflektierende Beugung unter einem Winkel von -70° bis -80° gegen die Oberflächennormale vorzusehen, sodass bei einer Erfassung, während die Anregungsstrahlung optimal gebeugt wird, in einem Winkelbereich von plus/minus 45° keine Anregungsstrahlung in die Erfassungsoptik oder, bei menschlicher Betrachtung, das menschliche Auge gebeugt wird.

Beschichtungen können auf kleine Kerne aufgebracht werden. Es ist jedoch auch gerade bei Funktionspigmenten, die Hologrammschichten und/oder beispielsweise Polarisationsschichten umfassen, die durch Ziehen und Spannen einer Polymerschicht erzeugt werden, vorteilhaft, die Interferenzstrukturen und gegebenenfalls eine Kernstruktur zunächst als größere flächige Einheiten herzustellen und anschließend zu zerkleinern.

Einfache Ausführungsformen sehen vor, dass die Lumineszenzstoffe genau ein Luminophor, d. h. einen Typ von Luminophor, umfassen, welcher bei der Anregung mit der einen Anregungsstrahlung die Lumineszenzstrahlung in dem ersten Wellenlängenbereich und in dem zweiten Wellenlängenbereich emittiert. Für solche Ausführungsformen eignen sich Luminophore, die eine Lumineszenzstrahlung in zwei voneinander getrennten Wellenlängenbereichen, insbesondere in zwei getrennten Wellenlängenbereichen des sichtbaren Wellenlängenbereichs emittieren. Diese Ausführungsformen ermöglichen es, die Lumineszenzstoffe in einem Zentrum und/oder um ein Zentrum der Funktionspigmente anzuordnen, z. B. in ein Kernmaterial einzubringen oder dieses zu beschichten.

Als Kern oder Kernschicht kann somit eine Polymermatrix dienen, in die lumineszenzaktive Substanzen eingebunden sind. Als lumineszenzaktive Substanzen eignen sich beispielsweise Verbindungen oder Ionen, beispielsweise Mischoxide, auf Basis der Seltenen Erden, insbesondere der Lanthanide, wie Europium.

Um den ersten Wellenlängenbereich und den zweiten Wellenlängenbereich frei wählen zu können, d. h., sofern diese beide im sichtbaren Wellenlängenbereich liegen, die Farben des Lumineszenzlichts für ein Sicherheitselement wählen zu können, können die Lumineszenzmittel auch zwei verschiedene Luminophore umfassen. Der eine erste Luminophor luminesziert in dem ersten Wellenlängenbereich der zweite Luminophor in dem zweiten Wellenlängenbereich.

Ein weiterer entscheidender Vorteil in der Verwendung von zwei verschiedenen Luminophoren besteht darin, dass der eine Luminophor, nicht nur im Kern oder auf dem Kern angeordnet sein kann, sondern auch im Material der einen der beiden Interferenzstruktur enthalten sein kann. Nimmt man ohne Beschränkung der Allgemeinheit an, dass der erste Luminophor in dem ersten Wellenlängenbereich luminesziert, so ist diesem Luminophor über den ersten Wellenlängenbereich die erste Interferenzstruktur zugeordnet. Folglich ist dem zweiten Luminophor, der in dem zweiten Wellenlängenbereich luminesziert, über den zweiten Wellenlängenbereich die zweite Interferenzstruktur zugeordnet. Ist die einem Kern oder einer Kernschicht näher benachbarte Interferenzstruktur die erste Interferenzstruktur und überlagert die zweite Interferenzstruktur die erste Interferenzstruktur, ist also entfernter vom Kern des Funktionspigments ausgebildet oder angeordnet, so kann der zweite Luminophor nicht nur in oder auf dem Kern des Funktionspigments verteilt sein, sondern auch in dem Material vorhanden sein, welches die erste Interferenzstruktur ausbildet. Hierdurch kann für den zweiten Luminophor auf einfache Weise eine größere Lumineszenzintensität erreicht werden, da größere Mengen des zweiten Luminophors in das Funktionspigment integriert werden können.

So kann beispielsweise bei einer solchen Ausführungsform die zweite Interferenzstruktur so ausgebildet sein, dass sie die Anregungsstrahlung, die aus einer Anregungsrichtung einfällt, nahezu vollständig reflektiert und somit eine Anregung der von der zweiten Interferenzstruktur überdeckten Luminophore verhindert. Die erste Interferenzstruktur ist dann beispielsweise so ausgebildet, dass sie Lumineszenzstrahlung, die in dem ersten Wellenlängenbereich emittiert wird, unter einem vorgegebenen Winkel oder einer vorgegebenen Erfassungsrichtung relativ zu einer Vorzugsrichtung des Funktionspigments, die beispielsweise durch eine Oberflächennormale des flachen Funktionspigments gegeben ist, schwächt. Abhängig von der Anregungsrichtung der Anregungsstrahlung ist somit im zweiten Wellenlängenbereich eine Variation der Lumineszenzintensität erfassbar. Im ersten Wellenlängenbereich ist eine erfassungsrichtungsabhängige Lumineszenzintensität, in der Regel zusätzlich zu der Anregungsrichtungsabhängigkeit zu erfassen.

Bei einer Ausführungsform ist somit der zweite Luminophor nur durch die zweite Interferenzstruktur überdeckt.

Bei einer Ausführungsform ist vorgesehen, dass der genau eine Luminophor und/oder der erste Luminophor nach außen durch die erste Interferenzstruktur und die zweite Interferenzstruktur überdeckt sind. Nach außen bezeichnet in diesem Zusammenhang eine Richtung von einem Zentrum oder Kern des Funktionspigments zu einer Erfassungsvorrichtung bzw. einer Person, die eine Verifikation des Sicherheitselements vornimmt.

Wie beschrieben kann bei einer Ausführungsform vorgesehen sein, dass zumindest ein Material, aus dem die erste Interferenzstruktur gebildet ist, das zweite Luminophor umfasst.

Die beschriebenen Funktionspigmente eignen sich um mit einem Bindemittel und gegebenenfalls weiteren Additiven, wie sie im Stand der Technik bekannt sind, mit den verschiedensten Druckverfahren verdruckt zu werden.

Nachfolgend wird die Erfindung unter Bezugnahme auf eine Zeichnung näher erläutert. Hierbei zeigen:
- Fig. 1: eine schematische Darstellung eines Sicherheitsdokuments, in dem ein Sicherheitselement mit einem verborgenen gedruckten Sicherheitsmerkmal enthalten ist, sowie der zur Verifikation notwendigen Gegenstände;
- Fig. 2: einen schematischen Querschnitt durch das Sicherheitsdokument nach Fig. 1 entlang der Schnittlinie A-A;
- Fig. 3: schematische Ansicht der Wellenlängenbereiche der Anregungsstrahlung sowie der Lumineszenzstrahlung;
- Fig. 4a: eine schematische Ansicht eines Sicherheitselements bei einer Einstrahlung von Anregungsstrahlung unter einer ersten Anregungsrichtung;
- Fig. 4b: eine schematische Darstellung der Lumineszenzintensität abhängig von einem Winkel der Anregungsstrahlung relativ zu einer Oberflächennormale des Sicherheitselements nach Fig. 4a und 4c;
- Fig. 4c: eine schematische Ansicht des Sicherheitselements nach Fig. 4a bei der Einstrahlung der Anregungsstrahlung unter einer anderen Anregungsrichtung;
- Fig. 5a: eine schematische Ansicht eines Sicherheitselements bei einer Erfassung unter einer ersten Erfassungsrichtung;
- Fig. 5b: eine schematische Darstellung der erfassten Intensitäten abhängig von einem Winkel der Erfassungsrichtung relativ zu einer Oberflächennormale des Sicherheitselements nach Fig. 5a und 5c;
- Fig. 5c: eine andere schematische Ansicht des Sicherheitselements nach Fig 5a bei einer Erfassung unter einer abweichenden Erfassungsrichtung;
- Fig. 6a: eine schematische Schnittansicht durch ein Funktionspigment bei einer Betrachtung unter 0° gegenüber einer Vorzugsrichtung des Funktionspigments; und
- Fig. 6b: eine schematische Schnittansicht durch das Funktionspigment nach Fig 6a bei einer Betrachtung unter 40° bis 70° gegenüber der Vorzugsrichtung des Funktionspigments.

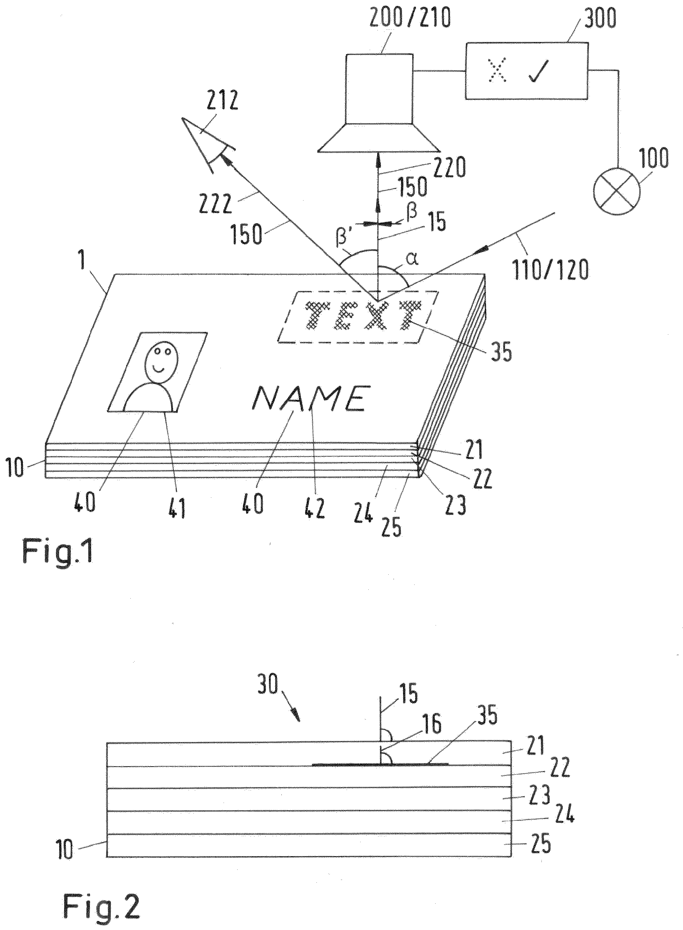

In Figur 1 ist schematisch ein Sicherheitsdokument 1 dargestellt.

Das Sicherheitsdokument 1 ist als Laminationskörper 10 aus Substratschichten 21-25 ausgebildet. Die Anzahl der Substratschichten 21-25 ist lediglich exemplarisch.

Bei einer alternativen Ausführungsform kann das Sicherheitsdokument auch nur aus einer Substratschicht, beispielsweise Papier oder einer einzelnen Substratschicht aus Kunststoff, bestehen.

Bei der dargestellten Ausführungsform ist ein Druck 35 auf einer im fertigen Laminationskörper 10 innen liegenden Substratschicht 22 aufgebracht, wodurch ein Sicherheitselement 30 ausgebildet ist. Die bedruckte Fläche weist die Gestalt des Wortes "Text" bei der hier dargestellten Ausführungsform auf.

Bei der erwähnten alternativen Ausführungsform ist der Druck auf der einen Substratschicht aufgebracht.

Das gedruckte Muster oder die Gestalt kann bei anderen Ausführungsformen beliebig anders gewählt werden. Hierüber kann eine Information in dem Sicherheitselement 30 und hierüber in dem Sicherheitsdokument 1 gespeichert werden.

Das Sicherheitsdokument 1 weist weitere Sicherheitsmerkmale 40 auf, beispielsweise ein Porträtbild 41 sowie persönliche Daten 42 beispielhaft durch den Schriftzug "Name" angedeutet. Die genannten weiteren Sicherheitsmerkmale sind hier nur exemplarisch und stellvertretend für andere Sicherheitsmerkmale genannt.

Der Druck 35 ist mit einer Tinte oder Druckzubereitung ausgeführt, die ein Funktionspigment umfasst. Das Funktionspigment umfasst Lumineszenzmittel, die in zwei voneinander getrennten Wellenlängenbereichen 1200, 1300, einem ersten Wellenlängenbereich 1200 und einem zweiten Wellenlängenbereich 1300, nach oder bei einer Anregung Lumineszenzstrahlung 150 emittieren. Schematisch dargestellt ist eine Anregungsquelle 100, die Anregungsstrahlung 110 unter einer Anregungsrichtung 120 auf das Sicherheitselement 30 einstrahlt. Hierbei ist die Substratschicht 21, die die Substratschicht 22 abdeckt, auf der der Druck 35 mit den Funktionspigmenten aufgebracht ist, als transparente Substratschicht zumindest im Bereich des Sicherheitselements 30 ausgeführt. Transparent bedeutet in diesem Zusammenhang, dass sowohl die Anregungsstrahlung 110 als auch die hierdurch angeregte Lumineszenzstrahlung 150 die Substratschicht 22 nahezu ungehindert gemäß den Gesetzen der geometrischen Optik passieren können. Dies bedeutet, dass weder eine nennenswerte Absorption noch Streuung in der transparenten Substratschicht 21 im Bereich des Sicherheitselements 30 stattfindet.

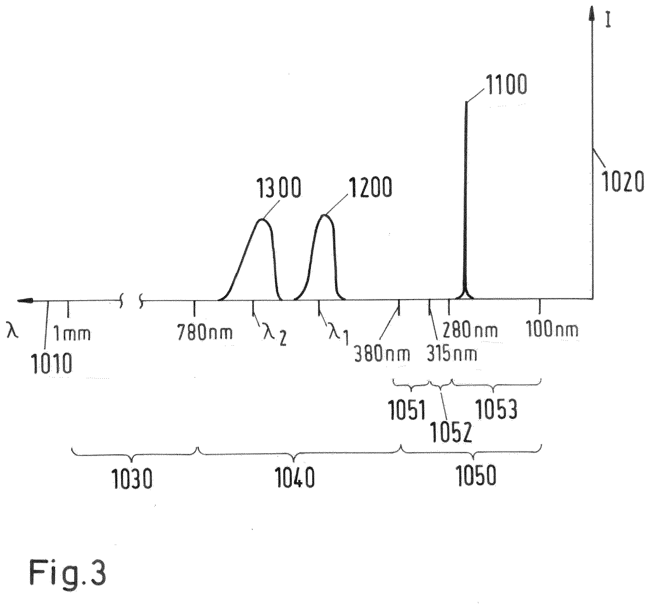

Die Funktionspigmente im Druck 35 emittieren bei Anregung mit der Anregungsstrahlung 110 Lumineszenzstrahlung 150. Diese wird beispielsweise von einer als Kamera 210 ausgebildeten Erfassungsvorrichtung 200 unter einer Erfassungsrichtung 220 erfasst. Im dargestellten schematischen Fall fällt die Erfassungsrichtung 220 mit einer Richtung einer Oberflächennormale 15 des Sicherheitsdokuments 1 zusammen. Diese ist gleich der Oberflächennormale (nicht dargestellt) der Substratschicht 22, auf der der Druck 35 aufgebracht ist. Mit der Erfassungsrichtung 220 korrespondiert ein Winkel β, gemessen gegen die Oberflächennormale 15. Die Erfassungsvorrichtung 200, zum Beispiel die Kamera 210, ist ausgebildet, die Intensität des Lumineszenzlichts wellenlängenselektiert zu erfassen. Sind die Lumineszenzmittel des Funktionspigments so ausgestaltet, dass diese bei einer geeigneten Anregung Lumineszenzstrahlung (Licht) in einem ersten Wellenlängenbereich 1200 (vergleiche Fig. 3), der mit einer grünen Farbe korrespondiert, und Lumineszenzstrahlung in einem zweiten Wellenlängenbereich 1300, der mit einer roten Farbe assoziiert ist, emittiert, so kann die Kamera die Intensität dieser Lumineszenzstrahlung in den beiden emittierten Wellenlängenbereichen getrennt erfassen.

Beispielsweise können unterschiedliche Farbauszüge 2010, 2020, ein erster Farbauszug 2010 für das erfasste Licht im ersten Wellenlängenbereich 1200 und ein zweiter Farbauszug 2020 für das erfasste Lumineszenzlicht beziehungsweise die Lumineszenzstrahlung im zweiten Wellenlängenbereich 1300, erstellt werden. Selbstverständlich können anderen Erfassungsvorrichtungen, wie Spektrometer oder Spektrografen verwendet werden. Geeignet sind alle Erfassungsvorrichtungen, die Licht wellenlängenaufgelöst und intensitätsaufgelöst für die beiden erwarteten Wellenlängenbereiche erfassen können, unter denen ein echtes mit einem korrekten Funktionspigment ausgebildetes Sicherheitselement 30 bei einer Anregung mit geeigneter Anregungsstrahlung 110 Lumineszenzstrahlung 150 emittiert.

Bei einer bevorzugten Ausführungsform liegen der erste Wellenlängenbereich 1200 und der zweite Wellenlängenbereich 1300 im sichtbaren Wellenlängenbereich. Somit kann die emittierte Lumineszenzstrahlung auch von einem menschlichen Betrachter, hier symbolisiert über ein schematisches Auge 212, zwar nicht zeitgleich unter derselben Erfassungsrichtung 220 wie die Kamera 210, jedoch alternativ oder, wie hier dargestellt, zeitgleich unter einer anderen Erfassungsrichtung 222 erfasst werden. Hiermit korrespondiert ein anderer Winkel β', gemessen gegen die Oberflächennormale 15. Es versteht sich für den Fachmann, dass sowohl ein menschlicher Betrachter als auch eine Erfassungsvorrichtung 200 eine Winkelabhängigkeit nur erfassen können, wenn die Lumineszenz für verschiedene Anregungsrichtungen und/oder Erfassungsrichtungen erfasst wird und die erfassten Lumineszenzintensitäten in den zwei Wellenlängenbereichen 1200, 1300 für die verschiedenen Richtungen verglichen und/oder miteinander in Beziehung gesetzt werden. Dieses erfolgt in einer Auswerteeinrichtung 300, die ein entsprechendes Verifikationsergebnis ausgibt. Wenn die erwarten Effekte nachgewiesen werden, wird ein Sicherheitsdokument 1 als echt ansonsten als nicht echt bezeichnet. Der menschliche Betrachter nimmt beispielsweise eine Änderung der relativen Lumineszenzintensitäten in den beiden Wellenlängenbereichen 1200, 1300 aufgrund der Farbaddition als eine Änderung der wahrgenommenen Farbe wahr. Es kann jedoch auch die Abnahme einer Intensität der Lumineszenz bei Änderung der Anregungsrichtung erfasst werden.

Die Auswerteeinrichtung kann auch die Anregungsquelle 100 und/oder die Erfassungsvorrichtung 200, sowie gegebenenfalls der Ausrichtung gegenüber dem Sicherheitsdokument 1 steuern, um eine automatisierte Prüfung durchzuführen. Hierfür benötigte Aktoren sind aus Gründen der Übersichtlichkeit hier nicht gezeigt und gesondert beschrieben.

Das Sicherheitselement 30 weist die Eigenschaft auf, dass in den beiden Wellenlängenbereichen 1200, 1300 entweder eine Abhängigkeit der Lumineszenzintensität von der Anregungsrichtung 120 der Anregungsstrahlung 110 und/oder eine Abhängigkeit von der Erfassungsrichtung 220 der erfassten Lumineszenzintensität in einem oder beiden Wellenlängenbereichen 1200, 1300 existiert. Hierbei sind die Richtungs- oder Winkelabhängigkeiten für die beiden Wellenlängenbereiche 1200, 1300 nicht vollständig identisch, sodass ein menschlicher Betrachter aufgrund der Farbaddition zumindest einen Farbwechseleffekt wahrnimmt. Hieraus ergibt sich, dass der erste Wellenlängenbereich 1200 und der Wellenlängenbereich 1300 einander nicht überlappen und vorzugsweise voneinander getrennt sind.

In Figur 3 sind schematisch der Wellenlängenbereich 1100 der Anregungsstrahlung 110 sowie der Lumineszenzstrahlung 150 im ersten Wellenlängenbereich 1200 und zweiten Wellenlängenbereich 1300 dargestellt. Auf der Abszisse ist die Wellenlängenskala 1010 von rechts nach links zunehmend dargestellt. Auf der Ordinate ist die Intensitätsskala 1020 dargestellt. Da eine Energie der Strahlung mit abnehmender Wellenlänge zunimmt, nimmt die Energie der Strahlung auf einer hier nicht dargestellten Energieskala von links nach rechts zu. Strahlung mit Wellenlängen oberhalb von 780 Nanometer wird als IR-Strahlung oder infrarote Strahlung und der entsprechende Wellenlängenbereich als IR-Wellenlängenbereich 1030 bezeichnet. Daran anschließend folgt der sichtbare Wellenlängenbereich 1040 mit Wellenlängen von 780 Nanometer bis 380 Nanometer. Im Wellenlängenbereich zwischen 380 und 100 Nanometer liegt der UV-Wellenlängenbereich 1050, der in einen UV-A-Wellenlängenbereich 1051 mit Wellenlängen von 380 Nanometer bis 315 Nanometer, einen UV-B-Wellenlängenbereich 1052 mit Wellenlängen von 315 Nanometer bis 280 Nanometer und einen UV-C-Wellenlängenbereich 1053 mit Wellenlängen von 280 Nanometer bis 100 Nanometer unterteilt ist. Typische Anregungsquellen weisen im UV-A-Wellenlängenbereich 1051 eine Wellenlänge von 365 Nanometer, im UV-B Wellenlängenbereich1052 eine Wellenlänge von 312 Nanometer und im UV-C-Wellenlängenbereich 1053 eine Wellenlänge von 254 Nanometer auf. Dargestellt ist exemplarisch der Wellenlängenbereich 1100 der Anregungsquelle 100, die Anregungsstrahlung 110 bei einer Wellenlänge von 254 Nanometer im UV-C-Wellenlängenbereich emittiert. Der erste Wellenlängenbereich der Lumineszenzstrahlung 1200 liegt im grünen Spektralbereich und der zweite Wellenlängenbereich 1300 im roten Spektralbereich.

In Figur 2 ist schematisch eine Querschnittszeichnung durch das Sicherheitsdokument nach Figur 1 entlang der Schnittlinie A-A dargestellt. Zu erkennen sind die Substratschichten 21-25, aus denen der Laminationskörper 10 des Sicherheitsdokuments 1 gebildet ist. Im fertigen Dokumentkörper sind die dargestellten Substratschichtgrenzen nicht mehr unmittelbar zu erkennen.

Zu erkennen ist in der schematischen Darstellung, dass auf eine Oberfläche der Substratschicht 22 der Druck 35, welcher mit dem Funktionspigment ausgeführt ist, aufgedruckt ist. Eine Schichtstärke des Drucks 35 ist ebenso wie die Substratschichtstärken nicht maßstäblich, sondern nur exemplarisch eingezeichnet. Eingetragen ist ferner die Oberflächennormale 15 des Sicherheitsdokuments 1, welche kollinear zu einer Oberflächennormale 16 der Substratschicht 22 ist. Zusätzlich zu den Lumineszenzmitteln, die eine Lumineszenz in dem ersten Wellenlängenbereich 1200 und dem zweiten Wellenlängenbereich 1300 bei einer Anregung mit derselben Anregungsstrahlung im Wellenlängenbereich 1100 zeigen, weist das Funktionspigment zwei Interferenzstrukturen auf, die einander vorzugsweise überlagern. Diese können richtungsabhängig mit der Anregungsstrahlung 110 und/oder richtungsabhängig mit der Lumineszenzstrahlung 150 wechselwirken.

Wichtig ist, dass die beobachtbaren Änderungen in den Lumineszenzintensitäten im ersten Wellenlängenbereich 1200 und dem zweiten Wellenlängenbereich 1300 nicht dadurch hervorgerufen werden, dass die Lumineszenzmittel oder ein und derselbe Luminophor bei unterschiedlichen Wellenlängen der Anregungsstrahlung zur Lumineszenz angeregt wird. Die Lumineszenz in den zwei voneinander getrennten und verschiedenen Wellenbereichen wird bei derselben Anregungsstrahlung 110 von den Lumineszenzmitteln emittiert, sofern die Anregungsstrahlung 110 nicht durch die Interferenzstrukturen an einer Anregung gehindert wird. Dies bedeutet, dass die Lumineszenzmittel die Interferenzstrukturen, d.h. wenn sie nicht in das Funktionspigment integriert sind, bei der Anregung die Lumineszenz in den beiden Wellenlängenbereichen zeigen.

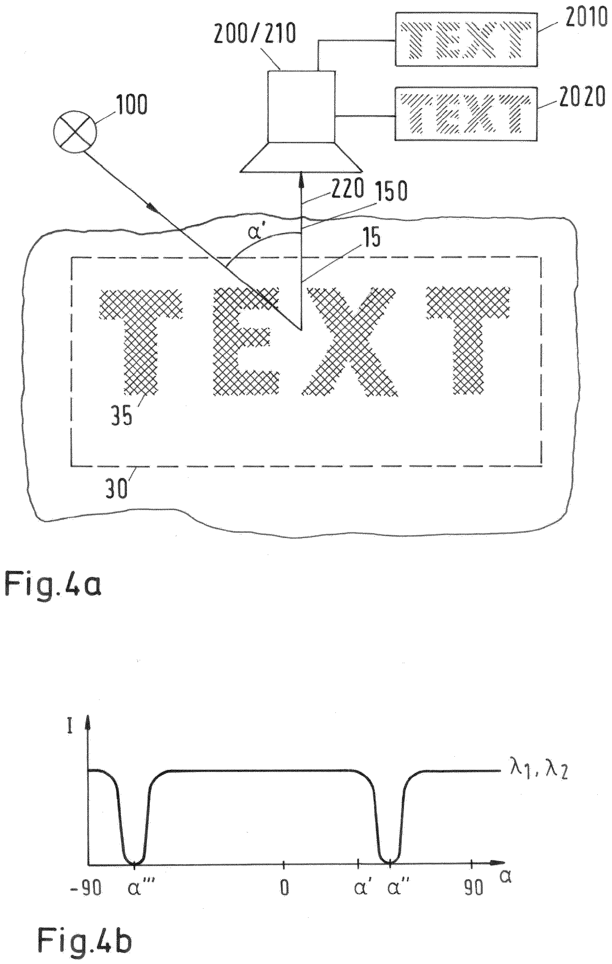

Anhand von Figur 4a bis 4c soll exemplarisch erläutert werden, wie eine Richtungsabhängigkeit von der Anregungsstrahlung 110 das Sicherheitselement 30 beispielhaft beeinflusst.

In Figur 4a ist ein Ausschnitt des Sicherheitsdokuments 1 mit dem Sicherheitselement 30 schematisch dargestellt. Die Anregungsstrahlung 110 wird unter einem Winkel a', das heißt, unter einer ersten Anregungsrichtung 120, auf das Sicherheitselement 30 relativ zu der Oberflächennormale 15 des Sicherheitsdokuments eingestrahlt. Mit einer Erfassungsvorrichtung 200, die beispielsweise eine Kamera 210 ist, werden verschiedene Farbauszüge für den ersten Wellenlängenbereich 1200 und den zweiten Wellenlängenbereich 1300 erfasst und von einer Auswerteeinrichtung 300 ausgewertet (vergl. Fig. 1). Die Erfassung findet beispielhaft parallel zur Richtung der Oberflächennormalen 15 statt. Die erfassten Farbauszüge 2010, 2020 bilden die Intensität der erfassten Lumineszenz in den jeweiligen zugeordneten Wellenlängenbereichen ortsaufgelöst und über eine "Helligkeit" intensitätsaufgelöst ab. Je intensiver oder heller ein Ort des Farbauszugs ist, desto größer ist die von dem jeweiligen Ort ausgehende Lumineszenzintensität. Die erfasste Intensität ist über eine Liniendichte der Schraffur angedeutet. In beiden Farbauszügen, das heißt, in beiden Wellenlängenbereichen 1200, 1300, ist der Umriss des Drucks 35, das Wort "Text", zu erkennen. Somit lumineszieren die Lumineszenzmittel im ersten Wellenlängenbereich 1200 und im zweiten Wellenlängenbereich 1300.

In Figur 4b sind die Intensitäten der Lumineszenzstrahlung im ersten Wellenlängenbereich 1200 λ₁ und im zweiten Wellenlängenberiech 1300 λ₂ abhängig von der Anregungsrichtung 120 der Anregungsstrahlung 110 aufgetragen. Die Anregungsrichtung wird mit einem Winkel α, gemessen relativ zur Oberflächennormale 15 des Sicherheitsdokuments 1, schematisch dargestellt.

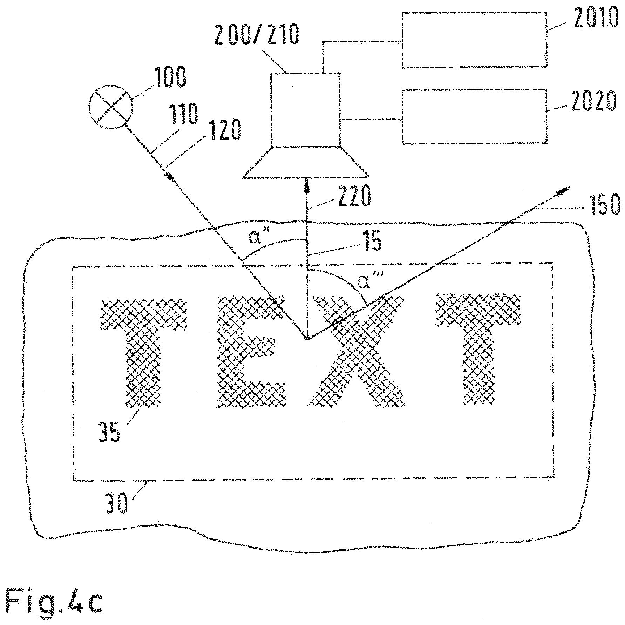

Zu erkennen ist, dass die Lumineszenzintensität bei bestimmten Winkeln α" aufgrund einer Wechselwirkung der Anregungsstrahlung 110 mit der einen Interferenzstruktur, welche vorzugsweise eine bezogen auf einen Kern des Funktionspigments äußere Interferenzstruktur ist, abgeschwächt ist. Unter einem solchen Winkel ist der Druck 35 bei der dargestellten Form weder im ersten noch im zweiten Wellenlängenbereich 1200; 1300 erfassbar. Diese Situation ist in Figur 4c schematisch dargestellt. In beiden Farbauszügen 2010, 2020 ist der Umriss des Drucks 35, das Wort "Text", nicht oder nur deutlich abgeschwächt erfassbar.

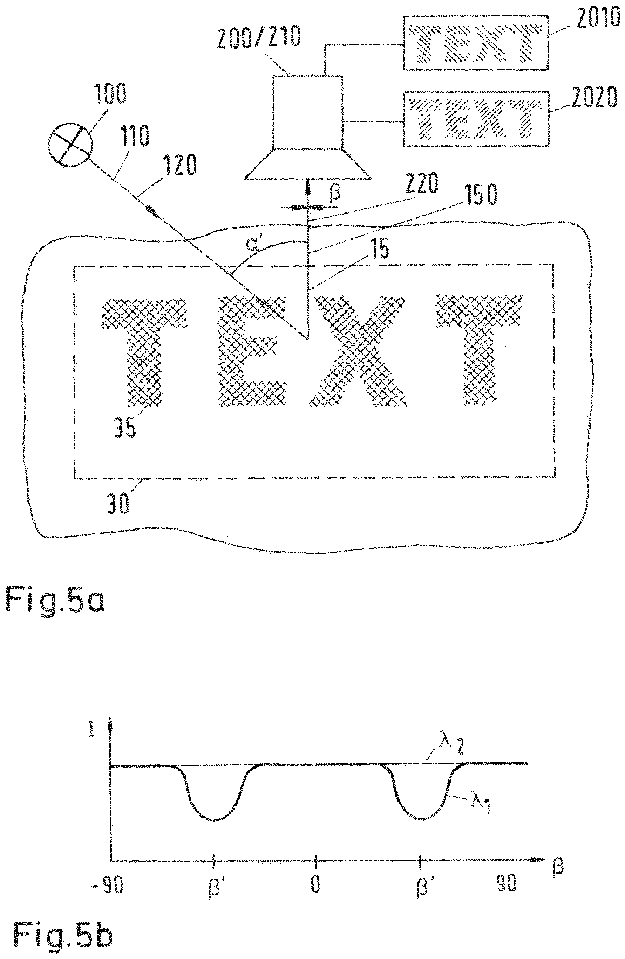

Anhand von Figur 5a wird beispielhaft erläutert, wie sich eine Erfassungsrichtungsabhängigkeit der Lumineszenzstrahlung bei dem Sicherheitselement 30 zeigt. Die Anregungsrichtung 120 der Anregungsstrahlung 110 ist so gewählt, dass grundsätzlich die Lumineszenzmittel der Funktionspigmente des Drucks 35 des Sicherheitselements 30 zur Lumineszenz im ersten Wellenlängenbereich 1200 und im zweiten Wellenlängenbereich 1300 angeregt werden. Eine Erfassung erfolgt erneut über eine als Kamera 210 ausgebildete Erfassungsvorrichtung 200, die einen Farbauszug 2010 im ersten Wellenlängenbereich 1200 und einen Farbauszug 2020 für die Lumineszenzstrahlung im zweiten Wellenlängenbereich 1300 erzeugt. Bei der gewählten Anregungsrichtung 120 / α' der Anregungsstrahlung 110 ist bei der gezeigten Erfassungsrichtung in beiden Farbauszügen 2010, 2020 die äußere Gestalt des Drucks 35 in Form des Wortes "Text" erfassbar.

In Figur 5b ist die erfasste Lumineszenzintensitäten des Sicherheitsdokuments 1 im ersten Wellenlängenbereich 1200 λ₁ und im zweiten Wellenlängenbereich 1300 λ₂ gegenüber verschiedenen Erfassungsrichtungen, die über einen Winkel β, gemessen gegenüber der Oberflächennormale 15, angegeben sind, schematisch dargestellt.

Während im zweiten Wellenlängenbereich 1300 λ₂ keine Erfassungsrichtungsabhängigkeit festzustellen ist, ist im ersten Wellenlängenbereich λ₁ 1200 unter bestimmen Winkeln β' ein deutliches Absinken der Lumineszenzintensität festzustellen, die unter diesen Erfassungsrichtungen 220 von der Erfassungsvorrichtung 200 erfasst wird.

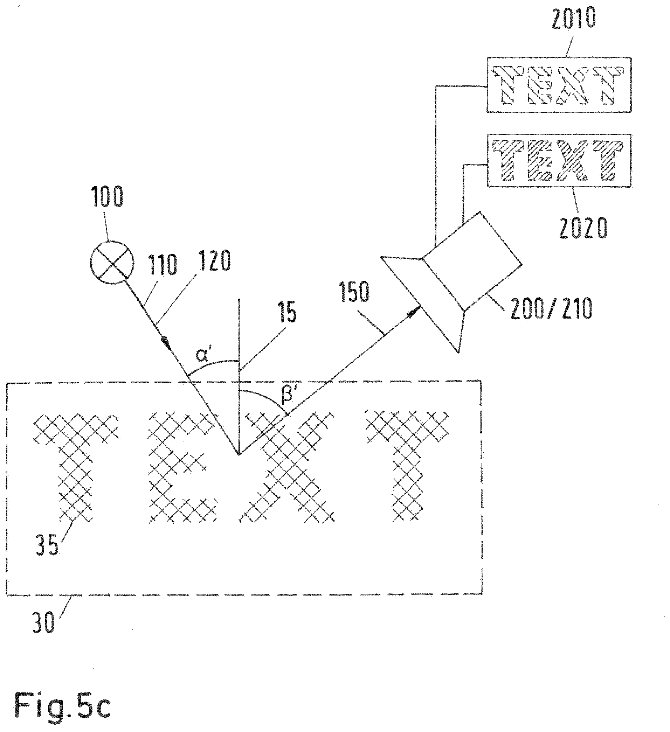

In Figur 5c ist eine Erfassung unter einer solchen Richtung β' schematisch dargestellt. Während im zweiten Farbauszug 2020 für den ersten Wellenlängenbereich 1300 der Umriss des Drucks 35 als Wort "Text" erfassbar ist, ist im Farbauszug 2010 für den ersten Wellenlängenbereich 1200 der Umriss gar nicht oder nur schwach zu erkennen. Für einen menschlichen Betrachter oder bei Überlagerung der Farbauszüge ist dies gleichbedeutend damit, dass bei einem Wechsel der Erfassungsrichtungen bei dem Winkel β' ein Farbwechsel erfasst wird.

Die Ursache dafür, dass im zweiten Wellenlängenbereich 1300 keine Erfassungsrichtungsabhängigkeit festgestellt wird, kann beispielsweise darin liegen, dass das Funktionspigment unterschiedliche Luminophore besitzt, wobei ein erster Luminophor im ersten Wellenlängenbereich 1200 und ein zweiter Luminophor im zweiten Wellenlängenbereich 1300 die Lumineszenzstrahlung emittieren. Das in Figuren 4b und 5b dargestellte Verhalten kann beispielsweise mit einem Funktionspigment erzeugt werden, bei dem der erste Luminophor, welches im ersten Wellenlängenbereich 1200 emittiert, im Inneren, beispielsweise in einer Kernschicht oder hierauf angeordnet ist. Dieser erste Luminophor wird von einer ersten Interferenzstruktur überdeckt. Der zweite Luminophor kann nun auf oder sogar im Material der ersten Interferenzstruktur vorhanden sein, wechselwirkt jedoch mit dieser ersten Interferenzstruktur nicht oder nur schwach. Die zweite Interferenzstruktur, die sowohl die erste Interferenzstruktur, den ersten Luminophor als auch den zweiten Luminophor überdeckt, ist ausgebildet, um unter bestimmten Richtungen einen Durchtritt der Anregungsstrahlung 110 zu verhindern und diese nahezu vollständig zu reflektieren. Findet diese Reflexion statt, werden weder der erste noch der zweite Luminophor angeregt, was die charakteristischen Lumineszenzeinbrüche bei bestimmten Anregungsrichtungen gemäß Figur 4b erklärt.

Die Einbrüche in der Lumineszenzstrahlung im ersten Wellenlängenbereich 1200 nach Fig. 5b sind hingegen erfassungsrichtungsabhängig in Zusammenhang mit der ersten Interferenzstruktur. Die Lumineszenz im zweiten Wellenlängenbereich 1300 wird hingegen durch die erste Interferenzstruktur nicht beeinflusst, sodass hier keine Erfassungsrichtungsabhängigkeit erfasst wird.

Andere Ausführungsformen können vorsehen, dass die zweite Interferenzstruktur so ausgebildet ist, dass sie mit der Lumineszenzstrahlung im zweiten Wellenlängenbereich 1300, das heißt, der Lumineszenzstrahlung des zweiten Luminophors erfassungsrichtungsabhängig wechselwirkt, dafür aber nicht mit der Anregungsstrahlung.

Hierbei sind beliebige Kombinationen möglich. Es ist auch möglich, dass die erste und/oder die zweite Interferenzstruktur auch auf die Lumineszenzstrahlung des Wellenlängenbereichs Einfluss nehmen, dem sie nicht unmittelbar zugeordnet sind, jedoch tritt die Wechselwirkung und Abschwächung hierbei für die unterschiedlichen Wellenlängenbereiche bei unterschiedlichen Erfassungsrichtungen auf.

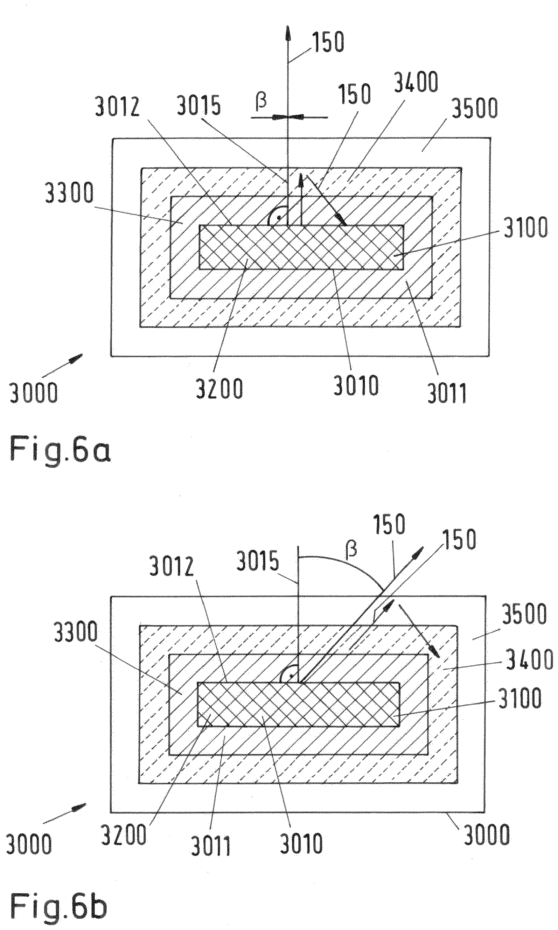

In Figur 6a und 6b ist schematisch jeweils ein Querschnitt durch ein Funktionspigment 3000 dargestellt. Zu erkennen ist ein Kern 3010, der über seine Form eine Vorzugsrichtung des Funktionspigments festlegt. In oder auf dem Kern 3010 ist der erste Luminophor 3200 ausgebildet, welcher über eine Schraffur von links oben nach rechts unten angedeutet ist. Allgemein gilt, dass in den Figuren 6a und 6b die Lumineszenzstoffe 3100 über Schraffuren dargestellt sind. Der Kern 3010 ist von einer ersten Interferenzstruktur 3400 umgeben, die beispielsweise aus Schichten mit wechselnden Brechungsindizes so ausgebildet sind, dass unter einer Erfassungsrichtung von 0°, gemessen gegen eine Oberflächennormale 15 einer flachen oder oblaten Oberseite 3012 des Kerns 3010, die emittierte Lumineszenzstrahlung 150 des ersten Luminophors 3200 stark geschwächt wird. Ebenfalls im Kern 3010 oder in einer weiteren Schicht 3011 zwischen dem Kern 3010 und der ersten Interferenzstruktur 3400 und gegebenenfalls (angedeutet über die gestrichelte Schraffur) zusätzlich im Material, aus dem die erste Interferenzstruktur 3400 gebildet ist, ist ein zweiter Luminophor 3300 vorhanden, welcher Licht im zweiten Wellenlängenbereich 1300 bei Anregung emittiert. Dieser zweite Luminophor 3300 ist über eine Schraffur von links unten nach rechts oben angedeutet. Dieser zweite Luminophor 3300, der erste Luminophor 3200 und die erste Interferenzstruktur 3400 sind von einer zweiten Interferenzstruktur 3500 umgeben, die ebenfalls aus dünnen Schichten und mit wechselnden Brechungsindizes gebildet ist. Diese zweite Interferenzstruktur 3500 ist ausgebildet, um unter Erfassungsrichtungen im Winkelbereich von 40° bis 70°, gemessen gegen die Oberflächennormale 15 der flachen Oberfläche 3011 des Kerns 3010 beziehungsweise der Vorzugsrichtung des Funktionspigments 3000, einen Durchtritt der Lumineszenzstrahlung im zweiten Wellenlängenbereich 1300 deutlich abzuschwächen. Hierbei wird die zweite Interferenzstruktur 3500 so ausgebildet, dass die Richtung, unter der die Abschwächung der Lumineszenzstrahlung im zweiten Wellenlängenbereich 1300 stattfindet, eine andere Richtung ist als jene, unter der die erste Interferenzstruktur 3400 die Lumineszenzstrahlung im ersten Wellenlängenbereich 1200 abschwächt. Hierdurch treten Farbwechseleffekte bei unterschiedlichen Erfassungsrichtungen auf. Die Richtung, unter der die Abschwächung stattfindet, kann durch die Wahl der Schichtdicken und Festlegung der Brechungsindizes der einzelnen Schichten eingestellt werden.

Andere Ausführungsformen können die Interferenzstrukturen über andere körperliche Ausprägungen herbeiführen, indem beispielsweise eine photonische Kristallgitterstruktur gebildet, eine Polarisationsschicht mit einer lichtkörperbrechenden Schicht kombiniert wird usw. Die verschiedenen Arten von Interferenzstrukturen können miteinander kombiniert werden, um die erste Interferenzstruktur und die zweite Interferenzstruktur auszubilden.

Es versteht sich, dass lediglich beispielhafte Ausführungsformen hier beschrieben sind. Die in der Beschreibung genannten Merkmale können beliebig kombiniert werden, um die Erfindung auszuführen.

### Bezugszeichenliste

- 1: Sicherheitsdokument
- 10: Laminationskörper
- 15: Oberflächennormale
- 21 bis 25: Substratschichten
- 30: Sicherheitselement
- 35: Druck
- 40: weitere Sicherheitsmerkmale
- 41: Porträtbild
- 42: persönliche Daten
- 100: Anregungsquelle
- 110: Anregungsstrahlung
- 120: Anregungsrichtung
- α, α': Winkel der Anregungsstrahlung, gemessen gegen Oberflächennormale
- 150: Lumineszenzstrahlung
- 200: Erfassungsvorrichtung
- 210: Kamera
- 212: menschliches Auge
- 220: Erfassungsrichtung
- 222: andere Erfassungsrichtung
- β: Winkel der Erfassungsrichtung, gemessen gegen Oberflächennormale
- β': anderer Winkel der anderen Erfassungsrichtung, gemessen gegen Oberflächennormale
- 300: Auswerteeinrichtung
- 1010: Wellenlängenskala (nimmt nach links zu)
- 1020: Intensitätsskala
- 1030: infraroten Wellenlängenbereich
- 1040: sichtbarer Wellenlängenbereich
- 1050: UV-Wellenlängenbereich
- 1051: UV-A-Wellenlängenbereich
- 1052: UV-B-Wellenlängenbereich
- 1053: UV-C-Wellenlängenbereich
- 1100: Anregungswellenlänge(nbereich)
- 1200: erster Wellenlängenbereich
- 1300: zweiter Wellenlängenbereich
- 2010: Farbauszug der Lumineszenzstrahlung im ersten Wellenlängenbereich
- 2020: Farbauszug der Lumineszenzstrahlung im zweiten Wellenlängenbereich
- 3000: Funktionspigment
- 3010: Kern
- 3011: weitere Schicht
- 3012: flache Oberfläche (Oberseite)
- 3015: Oberflächennormale
- 3100: Lumineszenzstoffe
- 3200: erster Luminophor
- 3300: zweiter Luminophor
- 3400: erste Interferenzstruktur
- 3500: zweite Interferenzstruktur

## Patentansprüche

1. Sicherheitselement (30) mit richtungsabhängigem verborgenen Sicherheitsmerkmal umfassend mindestens ein Substrat (22) und
einen Druck (35), der Funktionspigmente (3000) umfasst,
wobei die Funktionspigmente (3000) Lumineszenzstoffe (3100) umfassen, die mit einer Anregungsstrahlung (110) zur Emission von Lumineszenzstrahlung (150) in einem ersten Wellenlängenbereich (1200) und in einem zweiten Wellenlängenbereich (1300) anregbar sind,
**dadurch gekennzeichnet, dass**
die Funktionspigmente (3000) eine erste Interferenzstruktur (3400) und eine zweite Interferenzstruktur (3500) umfassen, wobei die erste Interferenzstruktur (3400) dem ersten Wellenlängenbereich (1200) zugeordnet ist und die zweite Interferenzstruktur (3500) dem zweiten Wellenlängenbereich (1300) zugeordnet ist, und die Interferenzstrukturen (3400, 3500) ausgebildet sind, dass die erfassbare Lumineszenzstrahlung (150) in dem ersten Wellenlängenbereich (1200) eine Abhängigkeit von einer Anregungsrichtung (120) der einen Anregungsstrahlung (110) und/oder eine Abhängigkeit von einer Erfassungsrichtung (220, 222) und die erfassbare Lumineszenzstrahlung (150) im zweiten Wellenlängenbereich (1300) eine Abhängigkeit von der Anregungsrichtung (120) und/oder eine Abhängigkeit von der Erfassungsrichtung (220, 222) zeigen, wobei die Anregungsrichtungsabhängigkeit und/oder die Erfassungsrichtungsabhängigkeit für die beiden Wellenlängenbereiche (1200, 1300) verschieden sind.

2. Sicherheitselement (30) nach Anspruch 1, **dadurch gekennzeichnet, dass** die Lumineszenzstoffe (3100) genau einen Luminophor umfassen, welcher bei der Anregung mit der einen Anregungsstrahlung (110) die Lumineszenzstrahlung (150) in dem ersten Wellenlängenbereich (1200) und in dem zweiten Wellenlängenbereich (1300) emittiert.

3. Sicherheitselement (30) nach Anspruch 1, **dadurch gekennzeichnet, dass** die Lumineszenzstoffe (3100) einen ersten Luminophor (3200), der bei der einen Anregungsstrahlung (110) die Lumineszenzstrahlung (150) in dem ersten Wellenlängenbereich (1200) emittiert, und einen zweiten Luminophor (3300) umfassen, der bei der einen Anregungsstrahlung (110) die Lumineszenzstrahlung (150) in dem zweiten Wellenlängenbereich (1300) emittiert.

4. Sicherheitselement (30) nach einem der vorangehenden Ansprüche, **dadurch gekennzeichnet, dass** der erste Wellenlängenbereich (1200) und der zweite Wellenlängenbereich (1300) im sichtbaren Wellenlängenbereich (1040) liegen.

5. Sicherheitselement (30) nach einem der vorangehenden Ansprüche, **dadurch gekennzeichnet, dass** die eine Anregungsstrahlung (110) UV-Strahlung ist, vorzugsweise im Wellenlängenbereich von 380 Nanometer bis 315 Nanometer und/oder von 315 Nanometer bis 280 Nanometer und/oder 280 Nanometer bis 100 Nanometer, besonders bevorzugt der Wellenlänge 365 Nanometer oder 312 Nanometer oder 254 Nanometer.

6. Sicherheitselement (30) nach einem der vorangehenden Ansprüche, **dadurch gekennzeichnet, dass** die Lumineszenzstoffe (3100) bei einer Weißlicht-Bestrahlung, die ein wellenlängenkontinuierliches Spektrum im sichtbaren Wellenlängenbereich (1040) aufweist, keine Lumineszenzstrahlung (150) im sichtbaren Wellenlängenbereich (1040) emittieren.

7. Sicherheitselement (30) nach einem der vorangehenden Ansprüche, **dadurch gekennzeichnet, dass** die Funktionspigmente (3000) bei einer Weißlicht-Bestrahlung, die ein wellenlängenkontinuierliches Spektrum im sichtbaren Wellenlängenbereich (1040) aufweist, farblos sind.

8. Sicherheitselement (30) nach einem der vorangehenden Ansprüche, **dadurch gekennzeichnet, dass** die Funktionspigmente (3000) eine Vorzugsrichtung für eine Ausrichtung in dem Druck (35) aufweisen.

9. Sicherheitselement (30) nach einem der vorangehenden Ansprüche, **dadurch gekennzeichnet, dass** die erste und/oder die zweite Interferenzstruktur (3500) aus dünnen Schichten mit unterschiedlichen Brechungsindizes gebildet sind.

10. Sicherheitselement (30) nach einem der vorangehenden Ansprüche, **dadurch gekennzeichnet, dass** die erste Interferenzstruktur (3400) und/oder die zweite Interferenzstruktur (3500) einen Polarisationsfilter und eine doppelbrechende Schicht umfassen.

11. Sicherheitselement (30) nach einem der vorangehenden Ansprüche, **dadurch gekennzeichnet, dass** die erste Interferenzstruktur (3400) und/oder die zweite Interferenzstruktur (3500) eine photonische Kristallstruktur umfasst.

12. Sicherheitselement (30) nach einem der vorangehenden Ansprüche, **dadurch gekennzeichnet, dass** der genau eine Luminophor und/oder der erste Luminophor (3200) nach außen durch die erste Interferenzstruktur (3400) und die zweite Interferenzstruktur (3500) überdeckt sind.

13. Sicherheitselement (30) nach einem der vorangehenden Ansprüche, **dadurch gekennzeichnet, dass** der zweite Luminophor (3300) nur durch die zweite Interferenzstruktur (3500) überdeckt ist.

14. Sicherheitselement (30) nach Anspruch 12, **dadurch gekennzeichnet, dass** zumindest ein Material, aus dem die erste Interferenzstruktur (3400) gebildet ist, das zweite Luminophor (3300) umfasst.
